(19) **Europäisches Patentamt**
**European Patent Office**
**Office européen des brevets**

(11) **EP 4 657 703 A1**

(12) **EUROPEAN PATENT APPLICATION**

(43) Date of publication:
**03.12.2025 Bulletin 2025/49**

(51) International Patent Classification (IPC):
**H02J 7/00** *(2006.01)*

(21) Application number: **24178486.7**

(22) Date of filing: **28.05.2024**

(52) Cooperative Patent Classification (CPC):
**H02J 7/0014; H02J 7/0032; H02J 7/0047; H02J 7/00714**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **SINGH, Shailesh**
**417 47 Göteborg (SE)**
• **BERNTSSON, Simon**
**417 53 Göteborg (SE)**
• **BORGELSSON MAANINKA, Adam**
**423 38 Torslanda (SE)**

(74) Representative: **Ström & Gulliksson AB**
**P.O. Box 4188**
**203 13 Malmö (SE)**

(54) **DETERMINATION OF A COMPENSATION CURRENT FOR A CHARGE EQUALIZATION CURRENT**

(57) A computer system (100; 600) for determining a compensation current adapted to counteract at least parts of a charge equalization current expected to be generated by an activation of an additional battery pack (20-n) in parallel connection with one or more currently activated battery packs (20). The compensation current is determined as a current range between a lower and upper compensation current limits. The lower limit is based on a voltage of the additional battery pack (20-n), and a voltage and impedance of the currently activated battery packs (20). The upper limit is based on a maximum discharge ability of a system powered by the currently activated battery packs (20), a maximum discharge ability of the currently activated battery packs (20), a voltage and impedance of the additional battery pack (20-n), and a voltage and impedance of the one or more currently activated battery packs (20).

FIG. 3

## Description

### TECHNICAL FIELD

The disclosure relates generally to energy storage systems. In particular aspects, the disclosure relates to determination of a compensation current for a charge equalization current. The disclosure can be applied to heavy-duty vehicles, such as trucks, buses, and construction equipment, among other vehicle types. The disclosure can also be applied to other areas of application, such as marine vessels, industrial applications, stationary applications, among other areas of application. Although the disclosure may be described with respect to a particular vehicle, the disclosure is not restricted to any particular vehicle.

### BACKGROUND

In a battery arrangement comprising a plurality of battery packs connected in parallel, there is an issue of unintended charge equalization currents flowing between these packs. This is especially the case under certain conditions, such as in cold temperatures and high state of charge scenarios, where there can be an increased battery internal resistance and a reduced ion mobility. Battery charge power capabilities are therefore limited, especially in these conditions. Unwanted charges circulating between battery packs might lead to violation of power limits, ultimately leading to lithium plating and battery degradation.

It is in view of the above observations and others the present inventors herein are suggesting one or more improvements to the prior art of compensation current determination.

### SUMMARY

Charge equalization currents typically occur when batteries are connected together but no load is applied. Once the load is applied, batteries deliver uneven currents until they are balanced. However, in the latter case the charges move in same direction, i.e., from batteries to the load. In cold temperatures or high state of charge scenarios, charging capabilities are limited. Even minor variations in open-circuit voltage or internal resistance between battery packs can lead to the problems mentioned in the background section above. One existing solution to address this problem involves using only a single battery pack, but this approach has obvious drawbacks as it introduces an imbalance in the system and limits power capabilities. Another existing solution involves setting a maximum current threshold, thereby allowing the connection of multiple battery packs only when the current remains within acceptable limits. However, setting a maximum current threshold to allow the connection of multiple battery packs can limit power, reduce battery utilization, introduce complexity, create balancing challenges, and potentially compromise safety. In some cases it may even lead to a situation where the battery packs cannot be connected to one another due to a failure to fulfil the established maximum current threshold. The prior art therefore fails to suggest a satisfactory solution for managing charge equalization currents.

The present disclosure therefore aims to overcome the problem of unintended charge equalization currents flowing between battery packs by introducing a calculation approach that aims to determine a compensation current that is adapted to counteract at least parts of a charge equalization current expected to be generated by an activation of an additional battery pack in parallel connection with one or more currently activated battery packs.

According to a first aspect of the disclosure there is provided a computer system for determining a compensation current, wherein the compensation current is adapted to counteract at least parts of a charge equalization current expected to be generated by an activation of an additional battery pack in parallel connection with one or more currently activated battery packs, the computer system comprising processing circuitry configured to: calculate a lower compensation current limit for the additional battery pack, the lower compensation current limit at least being based on a voltage and impedance of the additional battery pack, and a voltage and impedance of each one of the one or more currently activated battery packs; calculate an upper compensation current limit for the additional battery pack, the upper compensation current limit at least being based on a maximum discharge ability of an electrical system being powered by the one or more currently activated battery packs, a maximum discharge ability of the one or more currently activated battery packs, a voltage and impedance of the additional battery pack, and a voltage and impedance of each one of the one or more currently activated battery packs; and determine the compensation current as a current range between the lower and upper compensation current limits.

The first aspect of the disclosure may seek to enhance the functionality and longevity of battery systems in conditions where unintended charge equalization currents represent a risk, particularly in scenarios involving cold temperatures and high states of charge. The inherent advantages of the first aspect lie in its ability to dynamically calculate a precise range of compensation currents that can counteract the unwanted equalization currents triggered when an additional battery pack is activated in parallel. By considering the specific voltages and impedances of both the newly activated and the currently activated battery packs, as well as the maximum discharge abilities of the electrical system and battery packs involved, the system can determine a suitable current range to apply. This strategic approach mitigates the risk of lithium plating and subsequent battery degradation by preventing the circulation of unintended charges between packs. Unlike static estimation methods, this approach may provide a more reliable and deterministic solution for managing the power capabilities of battery arrangements, thus safeguarding their efficiency and extending their operational life.

Optionally in some examples, including in at least one preferred example, the current range is deterministic for each specific configuration of currently activated battery packs, and dynamically adaptable in response to a change in said each specific configuration. A technical advantage may include improved accuracy and responsiveness in adapting to changes in battery configuration.

Optionally in some examples, including in at least one preferred example, the change is caused by one or more of: an increment or decrement in the number of currently activated battery packs, a variation in internal cell resistance as a function of state of charge and temperature, and an increase in an ageing property of the one or more currently activated battery packs. A technical advantage may include enhanced system longevity by accounting for natural battery wear and environmental factors affecting performance.

Optionally in some examples, including in at least one preferred example, the maximum discharge ability is determined based on a state of charge and a required power duration for the one or more currently activated battery packs powering the electrical system. A technical advantage may include optimized battery performance by tailoring compensation currents to the specific discharge requirements of the system.

Optionally in some examples, including in at least one preferred example, a voltage difference between the voltage of the additional battery pack and the voltage of each one of the one or more currently activated battery packs is below a minimum allowed voltage difference to close a controllable contactor of the additional battery pack. A technical advantage may include the prevention of excessive current flow and potential damage during the integration of additional packs.

Optionally in some examples, including in at least one preferred example, the voltage difference is determined by properties of the controllable contactor and performance conditions of the additional battery pack. A technical advantage may include precise control over the connection process, ensuring safety and compatibility with system requirements.

Optionally in some examples, including in at least one preferred example, the processing circuitry is configured to calculate the lower and upper compensation current limits using Kirchhoff s laws. A technical advantage may include accurate and reliable current limit calculations that ensure electrical balance within the system.

Optionally in some examples, including in at least one preferred example, the processing circuitry is configured to calculate the lower compensation current limit using the following formula:

$$I_{ESS}(min) = v_n \left( \sum_{j=1}^{n} \frac{1}{R_j} \right) - \left( \sum_{j=1}^{n} \frac{v_j}{R_j} \right)$$

, where $I_{ESS}(min)$ is the lower compensation current limit, $n$ is an activation number of the additional battery pack in relation to the one or more currently activated battery packs, $v_n$ is the voltage of the additional battery pack, and $v_j$ and $R_j$ is the voltage and resistance, respectively, of battery pack $j$ from among the battery packs. A technical advantage may include a tailored approach to determining the minimum necessary compensation current based on real-time electrical properties of the battery packs.

Optionally in som examples, including in at least one preferred example, the processing circuitry is configured to calculate the upper compensation current limit using the following formula:

$$I_{ESS}(max) = I_{maxDch} R_n \left( \sum_{j=1}^{n} \frac{1}{R_j} \right) + v_n \left( \sum_{j=1}^{n} \frac{1}{R_j} \right) - \left( \sum_{j=1}^{n} \frac{v_j}{R_j} \right)$$

, where $I_{ESS}(max)$ is the upper compensation current limit, $n$ is an activation number of the additional battery pack in relation to the one or more currently activated battery packs, $R_n$ is the resistance of the additional battery pack, $v_n$ is the voltage of the additional battery pack, $v_j$ and $R_j$ is the voltage and resistance, respectively, of a battery pack $j$ of the one or more currently activated battery packs, and $I_{maxDch}$ is the maximum discharge ability of the one or more currently activated battery packs. A technical advantage may include safeguarding the system against overcurrent scenarios by setting a rigid upper boundary for compensation current.

Optionally in som examples, including in at least one preferred example, the processing circuitry is further configured to apply the compensation current to the one or more currently activated battery packs; and activate the additional battery pack. A technical advantage may include the facilitation of smooth integration of additional battery packs into the existing system without disrupting ongoing operations.

Optionally in som examples, including in at least one preferred example, the processing circuitry is configured to repeatedly determine the compensation current, apply the compensation current, and activate the additional battery pack, until a time-out condition is met, wherein the time-out condition is met once all battery packs included in an energy storage system or a HV component are activated, or once a battery circuit to which the one or more currently activated battery packs are connected has reached a maximum feasible current throughput. A technical advantage may include a systematic and automated approach to battery management that continues until the system reaches its optimal state or operational limit.

According to a second aspect of the disclosure there is provided a vehicle comprising the computer system of the first aspect.

The second aspect may seek to ensure precise management and integration of additional battery packs in a vehicle's power system by dynamically calculating optimal compensation currents to counteract charge equalization currents and prevent electrical imbalances. A technical benefit may include enhanced battery life and performance due to the accurate adjustment of compensation currents, improved reliability of the vehicle's electrical system, and the avoidance of potential damage from voltage differences when connecting additional battery packs, all of which represent significant improvements over previous static methods that could not adapt to changing battery conditions and configurations.

According to a third aspect of the disclosure there is provided a computer-implemented method for determining a compensation current, wherein the compensation current is adapted to counteract at least parts of a charge equalization current expected to be generated by an activation of an additional battery pack in parallel connection with one or more currently activated battery packs, the computer-implemented method comprising calculating a lower compensation current limit for the additional battery pack, the lower compensation current limit at least being based on a voltage and impedance of the additional battery pack, and a voltage and impedance of each one of the one or more currently activated battery packs; calculating an upper compensation current limit for the additional battery pack, the upper compensation current limit being at least based on a maximum discharge ability of an electrical system being powered by the one or more currently activated battery packs, a maximum discharge ability of the one or more currently activated battery packs, a voltage and impedance of the additional battery pack, and a voltage and impedance of each one of the one or more currently activated battery packs; and determining the compensation current as a current range between the lower and upper compensation current limits.

The third aspect of the disclosure may seek to accurately determine a compensation current range that counteracts unwanted charge equalization currents during the activation of an additional battery pack in a multi-pack battery system. A technical benefit may include enhanced precision in maintaining battery pack balance, reduced risk of damage from current mismatches, and improved overall efficiency and safety of the electrical system, surpassing prior art systems that may not have accounted for the dynamic nature of battery pack properties and the electrical system's discharge capabilities.

According to a fourth aspect of the disclosure there is provided a computer program product comprising program code for performing, when executed by the processing circuitry, the method of the third aspect.

The fourth aspect of the disclosure may seek to implement a method for determining compensation currents through software, enabling digital systems to mitigate charge equalization issues in battery packs. A technical benefit may include the ability to deploy the compensation current determination method across different hardware platforms, providing a scalable and easily updatable solution that enhances the adaptability and functionality of battery management systems beyond the capabilities of prior art.

According to a fifth aspect of the disclosure there is provided a non-transitory computer-readable storage medium comprising instructions, which when executed by the processing circuitry, cause the processing circuitry to perform the method of the third aspect.

The fifth aspect of the disclosure may seek to provide a reliable and distributable medium for software that performs dynamic compensation current calculations for battery management. A technical benefit may include the permanence and portability of the compensation current determination method, ensuring consistent performance across various devices and systems, and offering a robust solution that is not susceptible to the transient issues associated with prior art methods.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** is an system diagram of a heavy duty vehicle according to some examples.
**FIG. 2** is an illustration of a single battery pack circuit according to some examples.

**FIG. 3** is an illustration of a multiple battery pack circuit according to some examples.

**FIG. 4** is an illustration of diagrams illustrating an activation control procedure of multiple battery packs connected in parallel according to some examples.

**FIG. 5** is an flowchart diagram of a computer-implemented method for controlling activation of a plurality of battery packs connected in parallel according to some examples.

**FIG. 6** is a schematic diagram of a computer system for implementing examples disclosed herein according to some examples.

## DETAILED DESCRIPTION

The detailed description set forth below provides information and examples of the disclosed technology with sufficient detail to enable those skilled in the art to practice the disclosure.

The subject matter of the present disclosure addresses the issues mentioned in the background section by way of a sophisticated approach which intelligently determines a compensation current range. This system counters the problematic charge equalization currents that may arise when connecting an additional battery pack into a parallel arrangement, particularly under challenging conditions such as low temperatures and high charge states. By calculating lower and upper compensation current limits based on the distinct voltages and impedances of the involved battery packs and the maximal discharge capacities of the electrical system, the system ensures an optimal flow of current. This targeted approach not only prevents the detrimental effects of lithium plating and battery wear but also circumvents the limitations of static estimation methods, thereby enhancing the management and reliability of the power capabilities of the battery pack(s).

Generally, in the context of battery packs, it shall be noted that impedance can be calculated by the formula

$$Z = \sqrt{R^2 + (X_L - X_C)^2}$$ , where $Z$ is the impedance, $R$ is the resistance, $X_L$ is the inductive reactance and $X_C$ is the capacitive reactance. However, the calculations of the present disclosure simplify the impedance calculations by considering the reactance components as zero. This occurs in resistive circuits where the elements, such as resistors, do not introduce any phase shift between voltage and current. In such cases, the impedance reduces to just the resistance value, eliminating the need to account for reactance. This simplification can be useful in analyzing DC circuits or AC circuits operating at frequencies where reactive elements have negligible effects. To this end, while the impedance is considered, resistance and reactance are also considered, with the notion that the reactance can be neglected or at least diminished. In one, more or all of the equations herein the resistance can therefore be equal to the impedance.

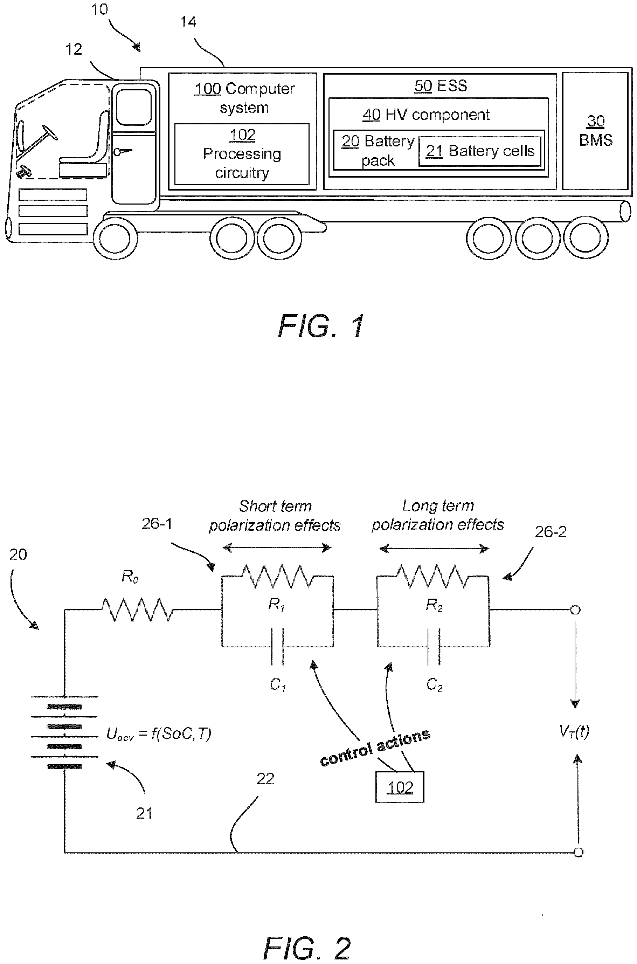

**FIG. 1** is an exemplary schematic illustration of a vehicle **10**. The vehicle **10** is illustrated as a heavy-duty vehicle, in this case a truck. The vehicle **10** is preferably an electric vehicle. In other areas of application other machines typically employing battery systems can be envisaged, such as for buses, marine vessels, construction equipment, personal vehicles, among other areas of application. The vehicle **10** comprises a tractor unit **12** which is arranged to tow a trailer unit **14**. While not explicitly shown, the vehicle **10** includes vehicle units and associated functionality as would be understood and expected by a skilled person, such as a powertrain, chassis, and various control systems.

The vehicle **10** comprises an energy storage system, ESS **50**. The ESS **50** is arranged to store electrical energy and release it as needed. The ESS **50** comprises a high-voltage, HV, component **40**. The HV component **40** is a relative term, and what is considered high voltage may depend on the context. In applicable power systems discussed herein, high voltage typically refers to voltages higher than the standard residential or commercial power distribution levels. Purely by way of example, voltage levels for HV components in traction batteries or fuel cell systems typically range between 200 V and 800 V or more, in DC fast chargers between 600 V and 1000 V, in HEV (Hybrid Electric Vehicles) between 200 and 300 V. The skilled person will appreciate that the voltage level for the HV component **40** is readily adaptable for other HV application areas.

The HV component **40** comprises a plurality of battery packs **20,** each battery pack **20** having a set of battery cells **21** responsible for storing energy in chemical form. When chemical reactions occur electrical energy is harnessed for various application. The battery cell **21** is the fundamental building block of a battery, comprising an anode, cathode, and electrolyte. Multiple battery cells **21** are combined to create a battery pack **21,** a modular unit that delivers voltage, capacity, and power for diverse applications. The battery packs **20** may include lithium-ion batteries, lithium iron phosphate batteries, solid-state batteries, graphene batteries, sodium-ion batteries, nickel-cobalt-manganese batteries, aluminum-ion batteries, or other battery types known in the art. The battery packs **20** are rechargeable and adapted to provide a source of electricity for an electric propulsion system (not shown). During charging, electricity from an external power source is used to replenish the energy stored in the battery packs **20,** the external power source typically being Electric Vehicle Supply Equipment (EVSE). EVSE refers to the infrastructure, commonly known as a charging station or charging point, that supplies electric energy for recharging the battery packs **20.** The stored electrical energy is then made available for the electric propulsion system or other power-consuming components, systems or subsystems of the vehicle **10.**

The vehicle **10** comprises a battery management system, BMS **30,** operating in tandem with the ESS **50** by monitoring and managing the individual battery cells **21** within the battery packs **20.** Typically, each battery pack **20** is associated with a BMS controller. Alternatively or additionally, the BMS **30** may include a master controller configured to monitor and manage a plurality of battery packs **20.** The BMS **30** ensures balanced charging and discharging, prevents overcharging or over-discharging, manages temperature, and optimizes overall performance and safety.

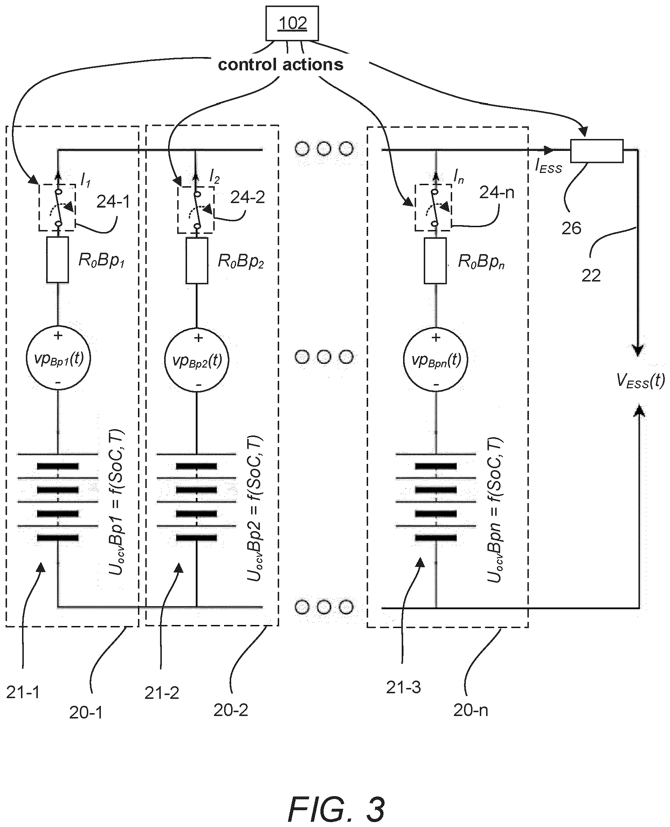

The vehicle **10** comprises a computer system **100** having processing circuitry **102.** The processing circuitry **102** is configured for determining a compensation current. The compensation current is adapted to counteract at least parts of a charge equalization current expected to be generated by an activation of an additional battery pack in parallel connection with one or more currently activated battery packs. The calculation of the compensation current involves calculating a lower compensation current limit, and an upper compensation current limit, and setting the compensation current as a current range between the lower and upper compensation current limits. This is done by an insightful consideration of various battery and power related data of a battery system involving currently activated battery packs, and battery packs that are to be activated. This way these limits are calculated will be discussed in more detail with further reference to **FIG. 3** later on in this disclosure.

The disclosure is applicable for parallel connected battery packs due to the fact that more power and capacity are needed for certain application areas. When multiple battery packs are in parallel connection, the term *activate* shall in contexts of the present disclosure refer to the simultaneous engagement of a battery pack to other connected one or more battery packs to contribute collectively to an electrical output or storage capacity. Activating parallel battery packs thus allows for increased current delivery capability, which enhances power performance and facilitates a shared load-bearing capacity during specific operational demands. Activation of battery packs may occur during the occurrence of different operational events, including but not limited to the provisioning of electrical power to an electric motor or combustion engine, the receiving and storage of electrical energy from the EVSE, the provisioning of power to auxiliary systems, on-board equipment, lifting mechanisms, climate control systems or other devices or the like. Regardless of what type of reason there is for activating a plurality of battery packs in parallel connection, this may be done by causing transmission of control signals or specific commands to the BMS **30.** The BMS 30 thereby dynamically manages the activation of battery packs **20** based on the received control signals or specific commands from the processing circuitry **102.** This will be described in more detail with further reference to **FIG. 2,** showing an exemplary single battery pack, and **FIG. 3,** showing a parallel connection of a plurality of battery packs.

**FIG. 2** shows an exemplary battery pack **20** comprising a battery circuit **22** having multiple battery cells **21.** The open-circuit voltage $U_{OCV}$ of each battery cell **21** is a function of the state of charge and temperature $U_{OCV} = f(SoC, T)$. The battery pack **20** further includes a load $R_0$, representing the internal ohmic resistance of the battery pack **20,** and the current through this node is denoted as $I(t)$.

The battery pack **20** further comprises a first controllable load **26-1** and a second controllable load **26-2.** In other examples any suitable number of controllable loads **26** can be realized. The controllable loads **26-1, 26-2** represent devices or systems that draw electrical power from the output of the battery pack **20,** such as a heater device, chiller device, electric machine, or practically any other device or auxiliary load having an electric output that can be controlled (e.g. increased or decreased). This is also in the present disclosure referred to as an electrical system being powered by the one or more currently activated battery packs.

It shall be noted that an electrical machine is not always a load; it can function as a source, such as a generator. Moreover, the other way around is neither always the case, since not all loads are electrical machines. For example, a resistive load does not qualify as an electrical machine.

The first controllable load **26-1** introduces short-term polarization effects. It includes a parallel-connected resistor $R_1$ and capacitor $C_1$. Short-term polarization effects are phenomena that occur temporarily during certain conditions, such as high current demand, high charge/discharge rates, temperature extremes, partial state of charge operation, sudden changes in load, aging and wear, impurities or contaminants, or incomplete charging cycles, affecting the behaviour of the battery pack **20.** The second controllable load **26-1** introduces long-term polarization effects. It includes a parallel-connected resistor $R_2$ and capacitor $C_2$. Long-term polarization effects are more persistent phenomena that affect the performance of the battery pack **20** over an extended period, such as cycling and cycling depth, state of charge extremes, consistently elevated temperatures, impurities and side reactions, overcharging or over-discharging, internal resistance changes or particle agglomeration.

Further shown in **FIG. 2** is the processing circuitry **102,** which is merely for illustrative purposes shown in conjunction with the battery pack **20.** It shall however be understood that this is typically not the case, as the functionality of the processing circuitry **102** is typically implemented as a more central controller depending on the area of application, such as in a central computer system **100** of a vehicle **10.** In any event, the processing circuitry **102** may be configured to cause various control actions with respect to components of the battery pack **20.**

The control actions may involve an activation action of the battery pack **20.** This may be done by controlling the controllable contactor **24** to be closed or opened based on control signals received from the processing circuitry **102.** A control signal sent to the controllable contactor **24** may control the closing thereof. Electronically closing a controllable contactor is, *as such,* well known to the skilled person. However, in the present disclosure this is conditioned by the application of a compensation current that is adapted to counteract at least parts of a charge equalization current expected to be generated by the subsequent activation of an additional battery pack.

Moreover, this compensation current has been calculated in a special way not anticipated by the prior art. Hence, the control actions carried out by the processing circuitry **102** further involve the determination of said compensation current by calculating lower and upper compensation current limits and determining a current range therebetween for purposes of subsequent application thereof. The activation of battery packs in conjunction with the determination and application of the compensation current will now be described in detail with further reference to the multiple battery packs **20-n** shown in **FIG. 3**. While only one controllable contactor **24-n** is shown in **FIG. 3** per battery pack **20-n,** it shall be understood that each battery pack **20-n** in typical configurations may involve three of them; one positive contactor, one negative contactor, and one pre-charge contactor.

**FIG. 3** shows an exemplary battery arrangement involving a plurality of battery packs **20-1, 20-2, 20-n**. In this very example $n$ is equal to three (i.e., the battery arrangement includes three battery packs), although it shall be understood that any alternative configuration of battery arrangements can alternatively be envisaged. Alternative configurations of battery arrangements may include any number of battery packs **20,** each having any number of battery cells, controllable contactors, loads, controllable loads, power sources, or other circuitry components.

Each battery pack **20** ($Bp_{1-n}$) includes a set of battery cells **21-1, 21-2, 21-n** with open-circuit voltage $U_{OCV}Bp_{1-n} = f(SoC, T)$. Each battery pack **20** ($Bp_{1-n}$) also includes the polarization effect $v_{pBp1-n}(t)$, internal ohmic resistance $R_0 Bp_{1-n}$, controllable contactor **24-1, 24-2, 24-n** and current $I_{1-n}$. The sum of the open-circuit voltage $U_{OCV}Bp_{1-n}$ and the voltage drop that occurs due to the internal ohmic resistance $R_0$ of each battery pack **20** results in the total overpotential. Over time, as the system stabilizes, the voltage will settle to the open-circuit voltage $U_{OCV}Bp_{1-n}$ alone, without any additional overpotential. The controllable contactor **24** is a switch that can be controlled to connect each battery pack **20** to or from the battery circuit **22**. This is similar to the single battery pack **20** shown and explained with reference to **FIG. 2,** with the difference that this battery arrangement includes three battery packs **20-1, 20-2, 20-n** and that the processing circuitry **102** may perform individual control to activate them one by one, for example by way of controlling the closing of the respective contactor **24-1, 24-2, 24-n.**

The battery packs **20-1, 20-2, 20-n** are connected to a common controllable load **26**. The controllable load **26** represents a device or system that draws electrical power from the combined output of the three battery packs **20-1, 20-2, 20-n,** such as a heater device, chiller device, electric machine, or practically any other device which electric output is controllable. This is also referred to herein as an electrical system being powered by the one or more currently activated battery packs **20-1, 20-2, 20-n**. Moreover, a common voltage $V_{ESS}(t)$ represents the collective voltage output of the three battery packs **20-1, 20-2, 20-n** as a result of combining the individual voltages of the battery packs **20-1, 20-2, 20-n,** and a common $I_{ESS}$ is also provided.

The controllable contactors **24-1, 24-2, 24-n** allow for selective activation or deactivation of each battery pack **20-1, 20-2, 20-n** in the battery circuit **22**. When the controllable contactors **24-1, 24-2, 24-n** are closed, the battery packs **20-1, 20-2, 20-n** contribute to the common voltage $V_{ESS}(t)$ and power delivery to the common controllable load **26.** In other battery arrangement examples, each battery pack may include a separate controllable load, or a subset of the battery packs may be connected to a common controllable load, while another subset of battery packs include a separate controllable load for each battery pack included in said another subset of battery packs.

A general control procedure of activating the battery packs may be realized according to the following. The processing circuitry **102** is configured to activate the first battery pack **20-1**. This is done by closing the contactor **24-1,** thus allowing current to flow from an outlet of the first battery cells **21-1,** through the battery circuit **22** via the controllable load **26** and back to an inlet of the battery cells **21-1.** At this time, the additional battery packs **20-2, 20-n** do not contribute to the common voltage $V_{ESS}(t)$ and current $I_{ESS}$ since they are not activated (their respective contactors **24-2, 24-n** may be opened).

It is now envisaged that the present power application requires more energy, thus requiring the activation of the additional battery packs **20-2, 20-n.** Thanks to the insights obtained by the inventors of the present disclosure, it is realized that a subsequent activation of additional battery packs **20-2, 20-n** may cause unwanted charge equalization currents to be generated in the battery circuit **22,** thereby inducing one or more of the disadvantageous effects mentioned in the background section. Therefore, instead of arbitrarily activating any number of additional battery packs **20-2, 20-n,** a more intelligent activation procedure is proposed, which involves a selective and individual activation of the additional battery packs **20-2, 20-n** based on a charge equalization current that is expected to be generated by a subsequent activation thereof.

The intelligent activation procedure involves determining a compensation current that is adapted to counteract at least parts of these unwanted charge equalization currents that are expected to be generated by the subsequent activation of the additional battery packs **20-2, 20-n** to the battery circuit **22.** In ideal operation conditions where all battery packs have exactly the same potential and internal resistance, there would be no equalization currents expected to be generated even when these are activated. However, in real-world scenarios, achieving perfect uniformity across all battery packs is practically impossible due to various factors, including but not limited to manufacturing variations, operating conditions and measurement limitations. Even within the same batch of batteries, individual batteries can have slight differences in capacity, self-discharge rates and internal resistance due to manufacturing variances. This is especially the case for different batches of batteries made by different manufacturers. Operating conditions such as temperature, age and usage history can also lead to variations in individual battery performance. Moreover, measuring the exact potential of each pack with perfect accuracy is impractical in certain applications, especially in high-voltage applications. Therefore, even if the initial potentials appear the same, these slight variations can cause small charge equalization currents to flow between the various battery packs to maintain balance over time. The charge equalization currents are accordingly *expected* to be generated due to the existence of these variations. For example, a first battery pack may have an open-circuit voltage of 700 V, and a second battery pack an open-circuit voltage of 702 V. In this example, the activation of these two exemplary battery packs in the same parallel configuration will cause an automatic balancing to occur so as to equalize a common open-circuit voltage to 701 V. In contexts of the present disclosure, a *compensation current* shall accordingly be interpreted as a current that, at least to some extent, prevents the equalization currents that are expected to occur from flowing between the battery pack that is to be subsequently activated and the other battery packs already included and activated in the battery circuit.

In the present disclosure, the compensation current is deterministically calculated, and defined as a current range between a lower and upper compensation current limit. The current range is determined for the additional battery pack **20-n** to be activated, meaning that it is preferably to be applied in conjunction with an activation of the additional battery pack **20-n** according to the teachings herein.

The upper compensation current limit may be a maximum discharge ability of the additional battery pack **20-n.** The maximum discharge ability of a battery pack is also known as a continuous discharge rate or maximum sustained discharge rate, referring to the highest current a battery pack can safely deliver continuously without experiencing damage or reduced lifespan. The maximum discharge ability may be determined based on a state of charge and a required power duration for the one or more currently activated battery packs **20** powering the electrical system. That is, the maximum discharge ability may be understood as the maximum rate at which the battery pack can be drained while maintaining its performance and integrity. Failure to meet this limit value in the compensation current range may cause excessive heat generation, electrode damage, performance degradation or lifespan reduction, to name some issues. The compensation current range is therefore preferably capped at this limit value in one end (in this example upper end, but the reverse can be true as well). In the other end, i.e., the lower compensation current limit (the reverse can be true as well), the limitation may be a minimum charge ability of the battery pack. This may offer some room to regulate the lower limit value based on e.g. system characteristics, battery properties, ambient conditions, application area, etc. The minimum charge ability of the battery pack may be substantially zero. That is, the compensation current range (*ccr*) can be seen as *minimum charge ability < ccr < maximum discharge ability.*

Deterministically calculating the compensation range means that a defined set of rules are used to precisely compute the range of compensation currents needed to counteract charge equalization currents between battery packs. This method is based on actual measurements or known characteristics such as voltage, resistance, and maximum discharge capabilities, rather than on probabilistic, static or guesswork-based approaches. The advantage of a deterministic calculation lies in its predictability and reliability. Since the system uses concrete, measurable data, the outcome is consistent and repeatable, minimizing the risk of errors or unexpected results. This is particularly beneficial in battery management systems where accurately maintaining the balance of charge across battery packs is crucial for preventing issues such as lithium plating, which can lead to battery degradation. By using a deterministic approach, the system ensures that the applied compensation current is both precise and optimal for the conditions at hand, leading to improved battery performance and longevity.

Moreover, defining a range of lower and upper values for the compensation current is advantageous because it provides flexibility and precision in managing the power distribution between battery packs connected in parallel. The lower limit ensures that enough compensation current is applied to effectively counteract the undesired equalization currents, which can cause inefficiencies and potential damage. The upper limit, on the other hand, prevents the application of excessive current that could lead to overcompensation, which can be just as harmful as under-compensation. This approach allows for fine-tuning the compensation current to the specific needs of the battery system at any given moment, taking into account the varying conditions that affect battery performance, such as temperature fluctuations and changes in state of charge. By having a calculated range, the system can adapt to these dynamic conditions and select an optimal compensation current within the range that maintains the health and efficiency of the battery packs, thereby improving their operational life and reducing the risk of costly battery failures.

When considering the various battery and system related data of the limits, the term "at least" is used. This indicates that, while the various data mentioned is considered, the calculations may depend on further factors not expressly mentioned, such as ambient temperatures. However, the present inventors have identified that the mentioned battery and system related data are particularly useful for purposes of being able to ensure the deterministic calculations. For example the ambient temperature, and other factors, may be an additional factor that can affect the values, but are not necessarily used in the respective calculations.

The lower compensation current limit is at least based on a voltage and resistance of the additional battery pack **20-n,** and a voltage and resistance of each one of the currently activated battery packs **20.** The calculation of the lower compensation current limit considers the voltage and resistance of the additional battery pack **20-n** and the voltage and resistance of the currently activated packs **20** because these factors may directly influence the magnitude of charge equalization currents that need to be neutralized to maintain balance and prevent inter-pack power losses.

The upper compensation current limit is at least based on a maximum discharge ability of an electrical system being powered by the currently activated battery packs **20,** a maximum discharge ability of the currently activated battery packs **20,** a voltage and resistance of the additional battery pack **20-n,** and a voltage and resistance of each one of the currently activated battery packs **20.** These factors are considered because it can be ensured that the applied compensation does not exceed the discharge capabilities of the electrical machine being powered by the system and of the currently activated battery packs **20,** thereby preventing overloading and potential damage. As such, we consider both the battery side (maximum discharge ability of the currently activated battery packs **20-n**) to see if it can deliver the calculated current, and on the electrical system side (maximum discharge ability of the electrical system) to see if it can handle the current to be received. It shall be noted that the maximum discharge abilities of the additional battery pack **20-n** may be considered here as well. In theory, connecting an additional pack could potentially violate its charge/discharge capability, especially depending on the system's state caused by compensating for the activated batteries' capabilities. For example, the state of health (SoH), temperature, or other properties may not necessarily be identical for the additional pack compared to the connected packs, leading to differences in capabilities.

In response to having calculated the respective current limits (upper and lower, or first and second since the reverse order may be envisaged), the compensation current to be applicable is determined as a current range between these limits.

In some examples, the current range is deterministic for each specific configuration of currently activated battery packs **20,** and dynamically adaptable in response to a change in said each specific configuration. The current range is thus, in these examples, uniquely determined for each specific arrangement of currently activated battery packs **20.** This implies that the system takes into account the exact electrical characteristics of the present configuration, i.e., voltage, resistance, and discharge capabilities. The advantage of such an approach is that the compensation may be highly accurate and specific to the current configuration, which improves the overall efficiency and balance of the battery system. Additionally, the system is designed to be dynamically adaptable, which means that it can adjust the compensation range in real time in response to any changes in the configuration of the battery packs. The compensation range may thus be recalculates to suit the new configuration. This dynamic adaptability may ensure that the battery system remains optimized for performance and longevity, even as the conditions and configuration of the battery packs evolve.

A change in the examples above may be one or more of an increment or decrement in the number of currently activated battery packs **20** (i.e., adaptable when a battery pack is added or removed), a variation in internal cell resistance as a function of state of charge and temperature, and an increase in an ageing property of the currently activated battery packs **20** (i.e., adaptable when characteristics of a pack change due to its age).

In some examples, a voltage difference between the voltage of the additional battery pack **20-n** and the voltage of each one of the one or more currently activated battery packs **20** is below a minimum allowed voltage difference to close the controllable contactor **24-n** of the additional battery pack **20-n.** Accordingly, the voltage difference is considered before closing the contactor **24-n** of the additional battery pack **20-n,** so that the additional battery pack **20-n** can be safely integrated into the existing configuration without causing electrical imbalance. This feature may ensure safe parallel connection of the additional battery pack **20-n** by preventing potential voltage imbalances that could lead to electrical stress and equipment damage, ultimately ensuring system reliability.

In the examples above, the mentioned voltage difference can be determined by properties of the contactor **24-n** and performance conditions of the additional battery pack **20-n.** This may be used for ensuring compatibility and safe operation. The performance conditions may involve state of charge, internal resistance, temperature, or the like. The contactor properties may involve rated voltage, current carrying capacity, switching thresholds, etc., or other properties used for prevention of arcing, contact welding and ensuring that the contactor **24-n** may function as intended under varying electrical loads.

In some examples, the upper and lower compensation current limits may be determined using Kirchhoff's laws. A framework may thus be envisaged for analyzing the complex electrical circuits of the battery system. The framework may be based on the following thirteen equations (1) - (13).

Firstly, an equivalent circuit model for a single battery pack is considered. The terminal voltage of a single battery pack can be described with a second order equivalent circuit model using Kirchhoff's law of voltage according to the following:

$$V_T(t) = U_{ocv}(SoC) + v_1(t) + v_2(t) + I(t)R_0 \ (1)$$

where $U_{ocv}$ is the open circuit voltage of the single battery pack as a function of state of charge, SoC, $v_1$ and $v_2$ are the dynamic polarization voltages across first and second RC pairs, respectively (see $R_1C_1$ and $R_2C_2$ of **FIG. 2** for an example reference). Time constants $t$ for polarization voltages may range from a few seconds to several minutes and represent details such as overvoltages, diffusion voltages, voltages due to charge transfer resistance, etc.

When connecting the additional battery pack **20-n** to the battery circuit **22,** it is assumed that the connection can be made within a few seconds. The slower dynamics (long term polarization effects) from equation (1) may be omitted. However, the additional battery pack **20-n,** at the time of connection thereof, may still be polarized from a previous operation. To simplify this problem, low deviations in the open-circuit voltage and overpotentials at the time of connection can be considered (since the connection typically only takes a few seconds), and the battery pack voltage before an application of load may thus be approximated using the following equations:

$$v(t_0) = U_{ocv}(SoC, T) + v_1(t_0) + v_2(t_0); (2)$$

$$v_p(t_0) = v_1(t_0) + v_2(t_0) \ (3)$$

For a fully relaxed battery, i.e., a battery that has been discharged or used and then allowed to rest or "relax" for a period of time before recharging, $v_1(t_0)$ and $v_2(t_0)$ will be zero. The terminal voltage of a fully relaxed battery terminal voltage immediately after application of load is thus calculated using the following equation:

$$V_T(t) = U_{ocv}(SoC, T) + I(t)R_0 \ (4)$$

In view of the above, the dynamics of the multiple battery pack model will be considered, for example the one shown in **FIG. 3**. Using Kirchhoff's law of voltage and solving for each loop of a battery pack, the following equation is considered:

$$V_{ESS} = U_{ocv_{Bp_n}}(SoC, T) + v_{p_{Bp_n}} + i_n R_{0_{Bp_n}}, \ (5)$$

where $V_{ESS}$ for the single battery module is calculated according to equations (2) and (3), thus resulting in the following equation:

$$V_{ESS} = v_{Bp_n} + i_n R_{0_{Bp_n}}, \ (6)$$

By rearranging equation (6) the following equation is obtained:

$$i_n = \frac{V_{ESS} - v_{Bp_n}}{R_{0_{Bp_n}}} \ (7)$$

When n battery packs are connected in parallel, Kirchhoff's current law gives us the following equation:

$$I_{ESS} = i_1 + I_2 + \cdots i_n \ (8)$$

and by combining equations (7) and (8) the following equation is obtained for the total current:

$$I_{ESS} = \frac{V_{ESS} - v_{Bp_1}}{R_{0_{Bp_1}}} + \frac{V_{ESS} - v_{Bp2}}{R_{0_{Bp_2}}} + \cdots + \frac{V_{ESS} - v_{Bp_n}}{R_{0_{Bp_n}}}$$

$$I_{ESS} = V_{ESS}\left(\frac{1}{R_{0_{Bp_1}}} + \frac{1}{R_{0_{Bp_2}}} + \cdots + \frac{1}{R_{0_{Bp_n}}}\right) - \left(\frac{v_{Bp1}}{R_{0_{Bp_1}}} + \frac{v_{Bp2}}{R_{0_{Bp_2}}} + \cdots + \frac{v_{Bpn}}{R_{0_{Bp_1}}}\right)$$

$$I_{ESS} = V_{ESS} \sum_{j=1}^{n} \frac{1}{R_{0_j}} - \sum_{j=1}^{n} \frac{v_j}{R_{0_j}} \ (9)$$

By transforming the total current equation (9) above into a terminal voltage equation, the following is obtained:

$$V_{ESS} = \frac{I_{ESS} + \left( \sum_{j=1}^{n} \frac{v_j}{R_j} \right)}{\sum_{j=1}^{n} \frac{1}{R_j}} \,(10)$$

Equation (10) is then used to substitute $V_{ESS}$ in equation (7), thereby obtaining the following:

$$i_n = \frac{I_{ESS} + \left( \sum_{j=1}^{n} \frac{v_j}{R_j} \right)}{R_n \left( \sum_{j=1}^{n} \frac{1}{R_j} \right)} - \frac{v_n}{R_n} \,(11)$$

Now, what remains is to determine the compensation current range involving lower and upper limits. This is to counteract circulation currents by the application of a load. This calculation and application may be done before connecting each additional battery pack **20-n.** As has been discussed before, some constraints should preferably be considered for this, which are charge abilities, discharge abilities and voltage differences between the currently activated battery packs **20** and the additional battery pack **20-n.** Generally, the constraints may be set-up according to the following relation: $I_{maxChrg} \geq i_n \geq I_{maxDchrg}$(MaxChrg/Dchrg as a function of SoC and T); abs($V_n$ - $V_{ESS}$) ≤ $V_{Diff}$. As discussed herein, the voltage difference can vary depending on various factors.

Based on equation (11) above and considering the set constraints above, the lower compensation current limit may be calculated using the following equation:

$$I_{ESS}(min) = v_n \left( \sum_{j=1}^{n} \frac{1}{R_j} \right) - \left( \sum_{j=1}^{n} \frac{v_j}{R_j} \right) \,(12)$$

where $I_{ESS}(min)$ is the lower compensation current limit, $n$ is an activation number of the additional battery pack **20-n** in relation to the one or more currently activated battery packs **20**, $v_n$ is the voltage of the additional battery pack **20-n,** and $v_j$ and $R_j$ is the voltage and resistance, respectively, of battery pack $j$ among the battery packs.

Based on equation (11) above and considering the set constraints above, the upper compensation current limit may be calculated using the following equation:

$$I_{ESS}(max) = I_{maxDch} R_n \left( \sum_{j=1}^{n} \frac{1}{R_j} \right) + v_n \left( \sum_{j=1}^{n} \frac{1}{R_j} \right) - \left( \sum_{j=1}^{n} \frac{v_j}{R_j} \right) \,(13)$$

where $I_{ESS}(max)$ is the upper compensation current limit, $n$ is an activation number of the additional battery pack **20-n** in relation to the one or more currently activated battery packs **20**, $R_n$ is the resistance of the additional battery pack **20-n**, $v_n$ is the voltage of the additional battery pack **20-n,** $v_j$ and $R_j$ is the voltage and resistance, respectively, of a battery pack $j$ of the one or more currently activated battery packs **20,** and $I_{maxDch}$ is the maximum discharge ability of the one or more currently activated battery packs **20.**

The compensation current may then be determined as a current range between the lower and upper compensation current limits calculated using equations (12) and (13), respectively.

Once having determined the compensation current, for example using the Kirchhoff's law framework discussed above, the processing circuitry **102** may be configured to apply the compensation current to currently activated battery packs **20** within the battery circuit **22.** In the example of **FIG. 3** the battery pack that is currently activated is the first battery pack **20-1.** The compensation current may be applied to the first battery pack **20-1** by way of controlling the controllable load **26.** When the controllable load **26** is controlled to be decreased (i.e. reduce its resistance), the current in the battery circuit **22** increases, thereby introducing an excess current that can correspond to the compensation current. The compensation current is preferably applied before the additional battery pack **20-2** has been activated, although some variations may be realized where the compensation current is applied after the additional battery pack **20-2** has been activated, or optionally about the same time as the additional battery pack **20-2** (e.g. control signals are sent one after the other from the processing circuitry **102,** possibly involving some minor signal delay) is activated.

Since the compensation current that at least partly counteracts the charge equalization currents expected to be generated by the activation of the additional battery pack **20-2** has now been introduced to the battery circuit **22,** the additional battery pack **20-2** can be activated. The charge equalization currents expected to be generated in response thereto are thereby mitigated by way the introduced compensation current that is introduced to the battery circuit **22**. Hence, even if the first battery pack **20-1** and the second battery pack **20-2** involves variations in potential, the inherent balancing therebetween are minimized. This may ensure compliance with power limits and enhance charging capabilities. Moreover, this approach may assist in avoiding lithium plating and safeguarding against battery degradation during charging processes. This strategic control may be particularly beneficial in challenging scenarios where charge equalization currents tend to be a greater issue, such as in cold weather conditions or situations with a high battery state of charge.

The above procedures of determining the compensation current, applying the compensation current, and activating an additional battery pack may be repeated for each additional battery pack to be activated. In the example of **FIG. 3,** the remaining battery pack is the third battery pack **20-3**. The difference between the activation of the second battery pack **20-2** and the activation of the third battery pack **20-3** is that the compensation current is not only applied to the first battery pack **20-1,** but also to the second battery pack **20-2** since it is now included as an activated battery pack in the battery circuit **22**. The compensation may accordingly involve a different for each additional activation depending on presently activated battery packs in the battery circuit **22**.

In some examples, the activation of an additional battery pack **20-2, 20-n** may be based on a value of response signal data. In these examples, the processing circuitry **102** is configured to make one or more measurements of the battery circuit **22,** for instance at its terminals. The terminals form a closed loop for the current flow, so measurements at these points can allow assessment of overall performance of the battery pack, including voltage, current, resistance, and the like. The measurements are made after the compensation current has been applied to the battery circuit **22** to assess whether the application thereof provides an expected behaviour of the current within the battery circuit **22.** Accordingly, the additional battery pack **20-2, 20-n** is in these examples activated based on a value of the response signal data. To make the assessment as regards to how the compensation current affects the total current of the battery circuit **22,** the obtained response signal data may be compared to prestored data corresponding to measurements taken before the compensation current was applied. By way of applying the compensation current, assessing how the battery circuit **22** behaves, and responding to these changes in a subsequent battery pack activation, a more reliable activation control procedure may be obtained. This procedure may provide an improved charge equalization mitigation.

The order of which the battery packs **20-1, 20-2, 20-n** are to be activated may vary depending on the battery configuration. In some examples, the battery packs **20-1, 20-2, 20-n** are selected to be activated in a descending order of open-circuit voltages. In these examples, the first battery pack **20-1** is the battery pack having the highest open-circuit voltage, and the second battery pack **20-2** is the battery pack having the second highest open-circuit voltage, and so forth, until the battery pack having the lowest open-circuit voltage is selected for activation. In alternative examples this may be inverted, i.e., starting with the battery pack having the highest open-circuit voltage and selecting additional battery packs to be activated in an ascending order of open-circuit voltages. In yet alternative approaches, the activation selection may be randomized. However, the ascending/descending order is more easily predictable, which may provide a higher precision in the compensation current determination, and also with respect to power demands.

The compensation current determination and application, and the battery pack activation, may be carried out repeatedly until a time-out condition is met. This may be done automatically in response to the ongoing operation requiring the additional power/capacity from additional battery packs, for example due to an increased power demand being identified. The time-out condition may correspond to a point in time at which all of the battery packs in a battery system or a battery subsystem have been activated, thus maximizing what power that can be outputted by the system or subsystem. Alternatively, the time-out condition may correspond to a point in time when the battery circuit **22** to which the battery packs **20** are connected has reached a maximum feasible current throughput. The maximum feasible current throughput, which can also be referred to as the current carrying capability, refers to a highest current the battery circuit **22** can safely handle on a continuous basis without being subjected to issues or damages such as excessive heating, voltage sag, component limitations, etc. This may depend on internal properties such as wire gauge, material, circuit design, environmental factors, etc.

If the time-out condition is a maximum feasible current throughput, and an ongoing operation reaches said time-out condition, some examples may involve the introduction of a delay timer during which no further battery packs are activated. Hence, instead of cancelling (or optionally restarting) the operation, the operation may be set on hold until obtained battery data indicates an increase in the maximum feasible current throughput. This may indicate that continued operation of repeatedly determining a compensation current, applying the compensation current, and activating additional battery packs is possible. The battery data may be obtained from the battery management system **30,** and the resumption of the operation may be done by cancelling the delay timer and setting a new time-out condition based on the updated maximum feasible current throughput indicated by the battery data. Several different factors may contribute to an increase in the maximum feasible current throughput, such as dynamic derating based on real-time conditions including changes in temperatures, loads or power demands, short-term surges or pulses, BMS adjustments, or the like.

To exemplify the above examples of a delay timer, a non-ideal scenario is envisaged. In an ideal scenario, the electrical system aims to distribute current across all battery packs until the total load is met or the system reaches its maximum current capacity. However, this may not always be the case due to the maximum feasible current throughput as explained above. The incorporation of the delay timer can therefore allow for some flexibility. For instance, if the system has a maximum current capacity of 15 A, but the demand is 20 A, the delay timer comes into play, giving the system time to adapt until the criteria are eventually met. One noteworthy consideration is the impact of loads on temperature, particularly when one of the loads functions as a heater. The increase in temperature can potentially enhance the available range, affecting the feasibility of drawing a specific amount of current. If the system cannot immediately fulfill the current demand, waiting becomes a strategic option. During this waiting period, the temperature gradually rises, influencing the power capability of the system. Continuous reporting by the battery packs through the BMS **30** may ensure that changes in temperature and power ability are consistently monitored. Consequently, when the temperature increases, the power capacity of the system also rises, providing an opportunity to meet the desired current requirements at a later point in time. This dynamic process may allow for efficient management of current demands, taking into account both system capabilities and the influence of temperature on performance.

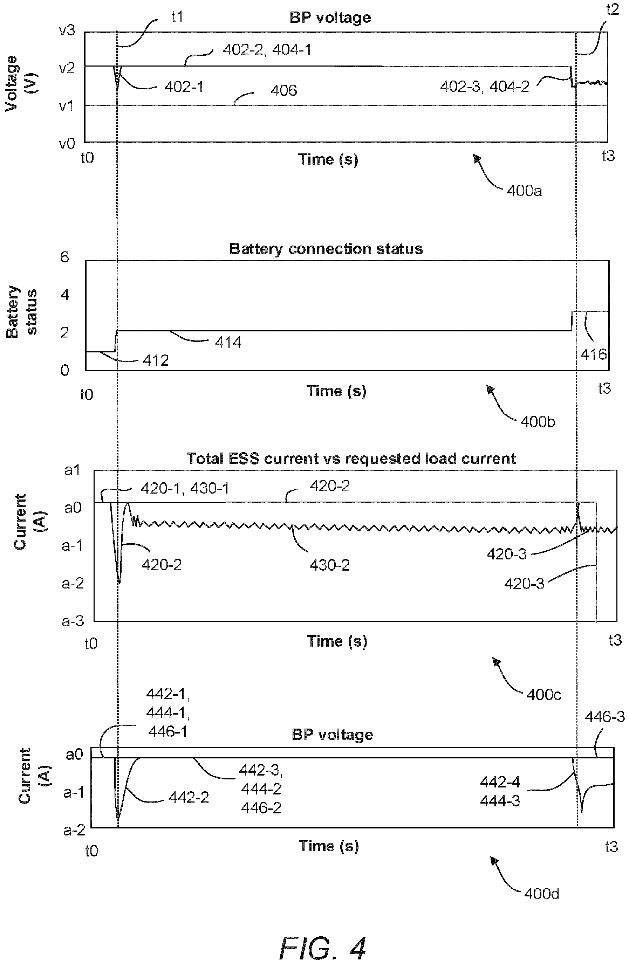

With further reference to **FIG. 4,** an exemplary procedure for controlling activation of a plurality of battery pack is shown generally according to teachings of the present disclosure. In this example there are three battery packs being sequentially activated, starting with a first battery pack, then a second, and finally a third. The first and second battery pack involve similar open-circuit voltages, approximately v2, whereas the third battery pack involves an open-circuit voltage of approximately v3. These values v2, v3 may be any suitable voltage used in battery packs, such as any value in the range 600-800 V, or the like. In order to connect the third battery pack in parallel with the first and second battery packs without any risk of causing charge equalization currents, a compensation current determination and application is done by the processing circuitry of the computer system. The subplots **400a, 400b, 400c, 400d** shown in **FIG. 4** share the x-axis (time) from t0 seconds (start) to approximately t3 seconds (end). T0 may be zero, and t3 any time that the procedure can take. Purely by way of example, t3 may be 10 seconds, 100 seconds, 500 seconds, 1000 seconds, or any value less or higher that is suitable for different application areas. At **t0** the first battery pack is already activated, at **t1** the second battery pack is activated, and at **t2** the third battery pack is activated.

The first subplot **400a** shows voltage over time. At **t1** the second battery pack is activated in parallel connection with the first battery pack, causing a short oscillation at **402-1** of the voltage of the first battery pack (pre-charge current). The voltage of the first and second battery packs are then balanced at **402-2, 404-1** until **t2** occurs. Because of the voltages of the first and second battery packs being substantially similar, i.e. v2, there are no charge equalization currents flowing between the packs. At **t2** when the third battery pack is connected, the voltages of the first and second battery oscillate and stabilize at **402-3, 404-2.** During the entire time shown in subplot **400a,** the voltage of the third battery pack remains at 406.

The second subplot **400b** shows battery status over time. The battery status indicates how many of the battery packs are activated. As seen at **t0,** the first battery pack **412** is activated. At **t1,** the second battery pack **414** is activated, and at **t2,** the third battery pack **416** is activated.

The third subplot **400c** shows two lines **420, 430** of currents over time. The first line **420** illustrates a total current of the ESS, and the second line **430** illustrates a requested load current. The total current of the ESS includes the sum of currents used for charging, discharging, and any internal losses within the ESS itself. The requested load current is the current drawn by the electrical load connected to the system, such as the controllable load **26** discussed herein. At **t2,** the total current of the ESS meets the requested load current. This means that the ESS is supplying the necessary electrical current to meet the demand of the connected load. This is when the connection attempt of the third battery pack is made. The compensation current is determined between the time periods **t1** and **t2,** i.e., after the second battery pack has been activated in parallel connection with the first battery pack but before the third battery pack has been activated. The processing circuitry may then be configured to notify a master controller of the battery packs, such as a controller in the ESS overseeing the operation of the battery packs, of the determined compensation current. This is so it can be applied in conjunction with (typically before) the activation of the third battery pack.

The fourth subplot **400d** shows charge equalization current over time for the first battery pack **442,** the second battery pack **444,** and the third battery pack **446.** In the fourth subplot **400d** when the third battery pack is connected at **t2,** it is shown that the compensation current has effectively eliminated (a0 = 0) charge equalization currents flowing from the third battery pack at **446-3** to the first and second battery packs at **442-4, 444-3.**

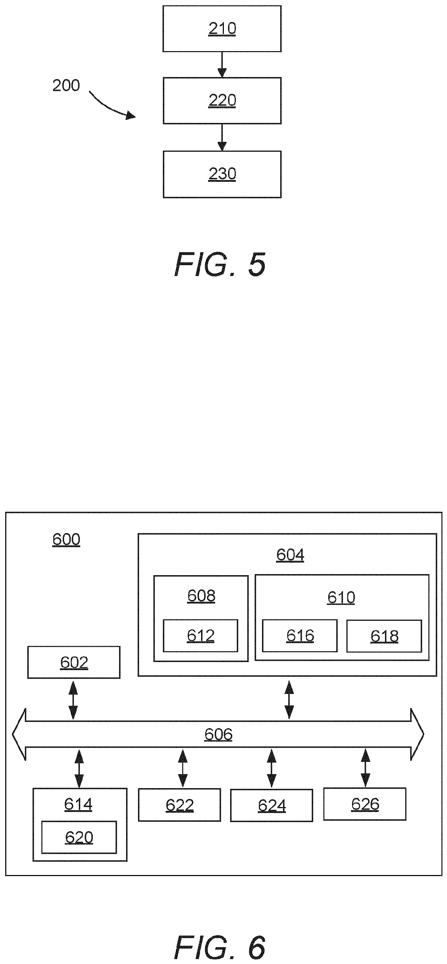

**FIG. 5** is a flowchart of a computer-implemented method **200** for determining a compensation current is shown. The compensation current is adapted to counteract at least parts of a charge equalization current that is expected to be generated by an activation of an additional battery pack in parallel connection with one or more currently activated battery packs. The method **200** comprises calculating **210** a lower compensation current limit for the additional battery pack, the lower compensation current limit at least being based on a voltage and resistance of the additional battery pack, and a voltage and resistance of each one of the one or more currently activated battery packs. The method **200** further comprises calculating **220** an upper compensation current limit for the additional battery pack, the upper compensation current limit being at least based on a maximum discharge ability of an electrical system being powered by the one or more currently activated battery packs, a maximum discharge ability of the one or more currently activated battery packs, a voltage and resistance of the additional battery pack, and a voltage and resistance of each one of the one or more currently activated battery packs. The method **200** further comprises determining **230** the compensation current as a current range between the lower and upper compensation current limits

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry 602 (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (100; 600) for determining a compensation current, wherein the compensation current is adapted to counteract at least parts of a charge equalization current expected to be generated by an activation of an additional battery pack (20-n) in parallel connection with one or more currently activated battery packs (20), the computer system (100; 600) comprising processing circuitry (102; 602) configured to: calculate a lower compensation current limit for the additional battery pack (20-n), the lower compensation current limit at least being based on a voltage and resistance of the additional battery pack (20-n), and a voltage and resistance of each one of the one or more currently activated battery packs (20); calculate an upper compensation current limit for the additional battery pack (20-n), the upper compensation current limit at least being based on a maximum discharge ability of an electrical system being powered by the one or more currently activated battery packs (20), a maximum discharge ability of the one or more currently activated battery packs (20), a voltage and resistance of the additional battery pack (20-n), and a voltage and resistance of each one of the one or more currently activated battery packs (20); and determine the compensation current as a current range between the lower and upper compensation current limits.

Example 2: The computer system (100; 600) of Example 1, wherein the current range is deterministic for each specific configuration of currently activated battery packs (20), and dynamically adaptable in response to a change in said each specific configuration.

Example 3: The computer system (100; 600) of Example 2, wherein said change is caused by one or more of: an increment or decrement in the number of currently activated battery packs (20), a variation in internal cell resistance as a function of state of charge and temperature, and an increase in an ageing property of the one or more currently activated battery packs (20).

Example 4: The computer system (100; 600) of any of Examples 1-3, wherein the maximum discharge ability is determined based on a state of charge and a required power duration for the one or more currently activated battery packs (20) powering the electrical system.

Example 5: The computer system (100; 600) of any of Examples 1-4, wherein a voltage difference between the voltage of the additional battery pack (20-n) and the voltage of each one of the one or more currently activated battery packs (20) is below a minimum allowed voltage difference to close a controllable contactor (24-n) of the additional battery pack (20-n).

Example 6: The computer system (100; 600) of Example 5, wherein the voltage difference is determined by properties of the controllable contactor (24-n) and performance conditions of the additional battery pack (20-n).

Example 7: The computer system (100; 600) of any of Examples 1-6, wherein the processing circuitry (102; 602) is configured to calculate the lower and upper compensation current limits using Kirchhoff's laws.

Example 8: The computer system (100; 600) of Example 7, wherein the processing circuitry (102; 602) is configured to calculate the lower compensation current limit using the following formula:

$$I_{ESS}(min) = v_n \left( \sum_{j=1}^{n} \frac{1}{R_j} \right) - \left( \sum_{j=1}^{n} \frac{v_j}{R_j} \right)$$

, where $I_{ESS}(min)$ is the lower compensation current limit, n is an activation number of the additional battery pack (20-n) in relation to the one or more currently activated battery packs (20), $v_n$ is the voltage of the additional battery pack (20-n), and $v_j$ and $R_j$ is the voltage and resistance, respectively, of battery pack $j$ from among the battery packs (20).

Example 9: The computer system (100; 600) of any of Examples 7-8, wherein the processing circuitry (102; 602) is configured to calculate the upper compensation current limit using the following formula:

$$I_{ESS}(max) = I_{maxDch}R_n \left(\sum_{j=1}^{n}\frac{1}{R_j}\right) + v_n \left(\sum_{j=1}^{n}\frac{1}{R_j}\right) - \left(\sum_{j=1}^{n}\frac{v_j}{R_j}\right)$$

, where $I_{ESS}(max)$ is the upper compensation current limit, n is an activation number of the additional battery pack (20-n) in relation to the one or more currently activated battery packs (20), $R_n$ is the resistance of the additional battery pack (20-n), $v_n$ is the voltage of the additional battery pack (20-n), $v_j$ and $R_j$ is the voltage and resistance, respectively, of a battery pack $j$ of the one or more currently activated battery packs (20), and $I_{maxDch}$ is the maximum discharge ability of the one or more currently activated battery packs (20).

Example 10: The computer system (100; 600) of any of Examples 1-9, wherein the processing circuitry (102) is further configured to: apply the compensation current to the one or more currently activated battery packs (20); and activate the additional battery pack (20-n).

Example 11: The computer system (100; 600) of Example 10, wherein the processing circuitry (102; 602) is configured to activate the additional battery pack (20-n) by controlling a closing of a controllable contactor (24) of a battery circuit (22) to which the one or more currently activated battery packs (20) are connected.

Example 12: The computer system (100; 600) of any of Examples 10-11, wherein the processing circuitry (102; 602) is configured to apply the compensation current by controlling one or more controllable loads (26) of a battery circuit (22) to which the one or more currently activated battery packs (20) are connected.

Example 13: The computer system (100; 600) of any of Examples 10-12, wherein the processing circuitry (102; 602) is configured to repeatedly determine the compensation current, apply the compensation current, and activate the additional battery pack (20-n), until a time-out condition is met.

Example 14: The computer system (100; 600) of Example 13, wherein the time-out condition is met once all battery packs (20) included in an energy storage system (50) or a HV component (40) are activated.

Example 15: The computer system (100; 600) of any of Examples 13-14, wherein the time-out condition is met once a battery circuit (22) to which the one or more currently activated battery packs (20) are connected has reached a maximum feasible current throughput.

Example 16: The computer system (100; 600) of Example 15, wherein in response to the battery circuit (22) reaching the maximum feasible current throughput, the processing circuitry (102; 602) is configured to: introduce a delay timer during which no additional battery pack (20-n) is activated, obtain battery data from a battery management system (30), and in response to the battery data indicating an increase in the maximum feasible current throughput, cancel the delay timer and cause a continued operation of repeatedly determining the compensation current, applying the compensation current, and activating additional battery packs (20-n).

Example 17: The computer system (100; 600) of any of Examples 1-16, wherein the one or more currently activated battery packs (20) comprise a higher open-circuit voltage, or sensor voltage if the one or more currently activated battery packs (20) are polarized from a previous operation, compared to the additional battery pack (20-n).

Example 18: The computer system (100; 600) of any of Examples 1-17, wherein the battery packs (20) are arranged in a high-voltage component (40).

Example 19: The computer system (100; 600) of Example 18, wherein the high-voltage component (40) is arranged in an energy storage system (50).

Example 20: The computer system (100; 600) of Example 19, wherein the energy storage system (50) is arranged in a vehicle (10).

Example 21: A high-voltage component (40) comprising the plurality of battery packs (20) of any of Examples 1-17, wherein the processing circuitry (102; 602) of the computer system (100; 600) of any of Examples 1-17 is configured to determine the compensation current.

Example 22: An energy storage system (50) comprising the high-voltage component (40) of Example 21.

Example 23: A vehicle (10) comprising the energy storage system (50) of Example 22.

Example 24: A computer-implemented method (200) for determining a compensation current, wherein the compensation current is adapted to counteract at least parts of a charge equalization current expected to be generated by an activation of an additional battery pack (20-n) in parallel connection with one or more currently activated battery packs (20), the computer-implemented method (200) comprising: calculating (210) a lower compensation current limit for the additional battery pack (20-n), the lower compensation current limit at least being based on a voltage and resistance of the additional battery pack (20-n), and a voltage and resistance of each one of the one or more currently activated battery packs (20); calculating (220) an upper compensation current limit for the additional battery pack (20-n), the upper compensation current limit being at least based on a maximum discharge ability of an electrical system being powered by the one or more currently activated battery packs (20), a maximum discharge ability of the one or more currently activated battery packs (20), a voltage and resistance of the additional battery pack (20-n), and a voltage and resistance of each one of the one or more currently activated battery packs (20); and determining (230) the compensation current as a current range between the lower and upper compensation current limits.

Example 25: A computer program product comprising program code for performing, when executed by the processing circuitry (102; 602), the method (200) of Example 24.

Example 26: A non-transitory computer-readable storage medium comprising instructions, which when executed by the processing circuitry (102; 602), cause the processing circuitry (102; 602) to perform the method (200) of Example 24.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 600) for determining a compensation current, wherein the compensation current is adapted to counteract at least parts of a charge equalization current expected to be generated by an activation of an additional battery pack (20-n) in parallel connection with one or more currently activated battery packs (20), the computer system (100; 600) comprising processing circuitry (102; 602) configured to:

   calculate a lower compensation current limit for the additional battery pack (20-n), the lower compensation current limit at least being based on a voltage and impedance of the additional battery pack (20-n), and a voltage and impedance of each one of the one or more currently activated battery packs (20);
   calculate an upper compensation current limit for the additional battery pack (20-n), the upper compensation current limit at least being based on a maximum discharge ability of an electrical system being powered by the one or more currently activated battery packs (20), a maximum discharge ability of the one or more currently activated battery packs (20), a voltage and impedance of the additional battery pack (20-n), and a voltage and impedance of each one of the one or more currently activated battery packs (20); and
   determine the compensation current as a current range between the lower and upper compensation current limits.

2. The computer system (100; 600) of claim 1, wherein the current range is deterministic for each specific configuration of currently activated battery packs (20), and dynamically adaptable in response to a change in said each specific configuration.

3. The computer system (100; 600) of claim 2, wherein said change is caused by one or more of:

an increment or decrement in the number of currently activated battery packs (20),
a variation in internal cell resistance as a function of state of charge and temperature, and
an increase in an ageing property of the one or more currently activated battery packs (20).

4. The computer system (100; 600) of any of claims 1-3, wherein the maximum discharge ability is determined based on a state of charge and a required power duration for the one or more currently activated battery packs (20) powering the electrical system.

5. The computer system (100; 600) of any of claims 1-4, wherein a voltage difference between the voltage of the additional battery pack (20-n) and the voltage of each one of the one or more currently activated battery packs (20) is below a minimum allowed voltage difference to close a controllable contactor (24-n) of the additional battery pack (20-n).

6. The computer system (100; 600) of claim 5, wherein the voltage difference is determined by properties of the controllable contactor (24-n) and performance conditions of the additional battery pack (20-n).

7. The computer system (100; 600) of any of claims 1-6, wherein the processing circuitry (102; 602) is configured to calculate the lower and upper compensation current limits using Kirchhoff's laws.

8. The computer system (100; 600) of claim 7, wherein the processing circuitry (102; 602) is configured to calculate the

$$I_{ESS}(min) = v_n \left( \sum_{j=1}^{n} \frac{1}{R_j} \right) - \left( \sum_{j=1}^{n} \frac{v_j}{R_j} \right)$$

lower compensation current limit using the following formula: , where $I_{ESS}(min)$ is the lower compensation current limit, $n$ is an activation number of the additional battery pack (20-n) in relation to the one or more currently activated battery packs (20), $v_n$ is the voltage of the additional battery pack (20-n), and $v_j$ and $R_j$ is the voltage and resistance, respectively, of battery pack $j$ from among the battery packs (20).

9. The computer system (100; 600) of any of claims 7-8, wherein the processing circuitry (102; 602) is configured to calculate the upper compensation current limit using the following formula:

$$I_{ESS}(max) = I_{maxDch} R_n \left( \sum_{j=1}^{n} \frac{1}{R_j} \right) + v_n \left( \sum_{j=1}^{n} \frac{1}{R_j} \right) - \left( \sum_{j=1}^{n} \frac{v_j}{R_j} \right)$$

, where $I_{ESS}(max)$ is the upper compensation current limit, $n$ is an activation number of the additional battery pack (20-n) in relation to the one or more currently activated battery packs (20), $R_n$ is the resistance of the additional battery pack (20-n), $v_n$ is the voltage of the additional battery pack (20-n), $v_j$ and $R_j$ is the voltage and resistance, respectively, of a battery pack $j$ of the one or more currently activated battery packs (20), and $I_{maxDch}$ is the maximum discharge ability of the one or more currently activated battery packs (20).

10. The computer system (100; 600) of any of claims 1-9, wherein the processing circuitry (102) is further configured to:

apply the compensation current to the one or more currently activated battery packs (20); and
activate the additional battery pack (20-n).

11. The computer system (100; 600) of claim 10, wherein the processing circuitry (102; 602) is configured to repeatedly determine the compensation current, apply the compensation current, and activate the additional battery pack (20-n), until a time-out condition is met, wherein the time-out condition is met once all battery packs (20) included in an energy storage system (50) or a HV component (40) are activated, or once a battery circuit (22) to which the one or more currently activated battery packs (20) are connected has reached a maximum feasible current throughput,

12. A vehicle (10) comprising the computer system (100; 600) of any of claims 1-11.

13. A computer-implemented method (200) for determining a compensation current, wherein the compensation current is adapted to counteract at least parts of a charge equalization current expected to be generated by an activation of an additional battery pack (20-n) in parallel connection with one or more currently activated battery packs (20), the computer-implemented method (200) comprising:

calculating (210) a lower compensation current limit for the additional battery pack (20-n), the lower compensation current limit at least being based on a voltage and impedance of the additional battery pack (20-n), and a voltage and impedance of each one of the one or more currently activated battery packs (20);

calculating (220) an upper compensation current limit for the additional battery pack (20-n), the upper compensation current limit being at least based on a maximum discharge ability of an electrical system being powered by the one or more currently activated battery packs (20), a maximum discharge ability of the one or more currently activated battery packs (20), a voltage and impedance of the additional battery pack (20-n), and a voltage and impedance of each one of the one or more currently activated battery packs (20); and

determining (230) the compensation current as a current range between the lower and upper compensation current limits.

14. A computer program product comprising program code for performing, when executed by the processing circuitry (102; 602), the method (200) of claim 13.

15. A non-transitory computer-readable storage medium comprising instructions, which when executed by the processing circuitry (102; 602), cause the processing circuitry (102; 602) to perform the method (200) of claim 13.

FIG. 1

FIG. 2

FIG. 3

*FIG. 4*

FIG. 5

FIG. 6

EUROPEAN SEARCH REPORT

Application Number

EP 24 17 8486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/311706 A1 (TAKAO HIROSHI [JP]) 5 October 2023 (2023-10-05) | 1-7, 10-15 | INV. H02J7/00 |
| A | * paragraphs [0077] - [0127]; figures 6,7,13,14 * | 8,9 | |
| A | US 2013/088201 A1 (IWASAWA HIROSHI [JP] ET AL) 11 April 2013 (2013-04-11) * figure 2 * | 1 | |
| A | US 2016/049813 A1 (TAKIZAWA SHUICHI [JP] ET AL) 18 February 2016 (2016-02-18) * figures 14-18 * | 1 | |
| A | KR 2021 0044028 A (LG CHEMICAL LTD [KR]) 22 April 2021 (2021-04-22) * figures 6,7 * | 1 | |

TECHNICAL FIELDS SEARCHED (IPC)

H02J

The present search report has been drawn up for all claims

| Place of search | Date of completion of the search | Examiner |
|---|---|---|
| Munich | 31 October 2024 | Ramcke, Ties |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 657 703 A1

## ANNEX TO THE EUROPEAN SEARCH REPORT
## ON EUROPEAN PATENT APPLICATION NO.

EP 24 17 8486

31-10-2024

| Patent document cited in search report | Publication date | Patent family member(s) | | Publication date |
|---|---|---|---|---|
| US 2023311706 A1 | 05-10-2023 | CN | 115956032 A | 11-04-2023 |
| | | EP | 4224663 A1 | 09-08-2023 |
| | | JP | WO2022070716 A1 | 07-04-2022 |
| | | US | 2023311706 A1 | 05-10-2023 |
| | | WO | 2022070716 A1 | 07-04-2022 |
| US 2013088201 A1 | 11-04-2013 | CN | 102893170 A | 23-01-2013 |
| | | EP | 2562555 A1 | 27-02-2013 |
| | | JP | 5564561 B2 | 30-07-2014 |
| | | JP | WO2011132311 A1 | 18-07-2013 |
| | | KR | 20130004336 A | 09-01-2013 |
| | | US | 2013088201 A1 | 11-04-2013 |
| | | WO | 2011132311 A1 | 27-10-2011 |
| US 2016049813 A1 | 18-02-2016 | CN | 105075056 A | 18-11-2015 |
| | | EP | 2980954 A1 | 03-02-2016 |
| | | JP | 6225986 B2 | 08-11-2017 |
| | | JP | WO2014155986 A1 | 16-02-2017 |
| | | US | 2016049813 A1 | 18-02-2016 |
| | | WO | 2014155986 A1 | 02-10-2014 |
| KR 20210044028 A | 22-04-2021 | NONE | | |